(19) Europäisches Patentamt / European Patent Office / Office européen des brevets

(11) **EP 2 741 925 B1**

(12) **FASCICULE DE BREVET EUROPEEN**

(45) Date de publication et mention
de la délivrance du brevet:
**14.10.2015 Bulletin 2015/42**

(21) Numéro de dépôt: **12750553.5**

(22) Date de dépôt: **03.08.2012**

(51) Int Cl.:
***B60C 9/18*** *(2006.01)*

(86) Numéro de dépôt international:
**PCT/EP2012/065220**

(87) Numéro de publication internationale:
**WO 2013/023937 (21.02.2013 Gazette 2013/08)**

(54) **PNEUMATIQUE COMPORTANT UNE ARMATURE SOMMET**

LUFTREIFEN MIT EINER KRONENVERSTÄRKUNG

TYRE COMPRISING A CROWN REINFORCEMENT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.08.2011 FR 1157317**

(43) Date de publication de la demande:
**18.06.2014 Bulletin 2014/25**

(73) Titulaires:
• **Compagnie Générale des Etablissements
Michelin
63000 Clermont-Ferrand (FR)**
• **MICHELIN Recherche et Technique S.A.
1763 Granges-Paccot (CH)**

(72) Inventeurs:
• **BESSON, Jacques
F-63040 Clermont-Ferrand cedex 9 (FR)**
• **LARDJANE, Aurore
F-63040 Clermont-Ferrand cedex 9 (FR)**
• **DIMIER, François
F-63040 Clermont-Ferrand cedex 9 (FR)**

(74) Mandataire: **Le Cam, Stéphane Georges Elie
Manufacture Francaise des
Pneumatiques Michelin
23, place des Carmes-Déchaux
DGD/PI - F35 - Ladoux
63040 Clermont-Ferrand Cedex 9 (FR)**

(56) Documents cités:
**EP-A1- 2 106 930    WO-A1-2006/013077**

**Description**

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Lors de la fabrication de tels pneumatiques, la dernière étape consiste à cuire le pneumatique pour permettre la réticulation et/ou vulcanisation des différents mélanges polymériques constitutifs du pneumatique. Cette étape de cuisson du pneumatique est une étape qui immobilise le pneumatique pendant plusieurs minutes et est considérée à ce titre comme une étape pertinente au regard de la productivité relative à la fabrication d'un pneumatique. En outre, cette étape qui se fait à une température élevée est consommatrice d'énergie.

La durée de la cuisson est notamment imposée par le temps nécessaire pour obtenir des matériaux constitutifs avec les propriétés recherchées sachant que la réticulation et/ou vulcanisation ne se déroule pas de la même façon pour des mélanges radialement ou axialement apparents que pour des mélanges internes. De la même façon, la réticulation et/ou vulcanisation varie selon la nature et les épaisseurs des mélanges.

Il est également connu qu'il est nécessaire d'augmenter ces temps de cuisson pour éviter l'apparition de bulles au sein des mélanges polymériques, notamment au niveau des épaules du pneumatique, aux extrémités axiales de l'armature de sommet.

Il est connu que ces zones du pneumatique qui sont parmi les plus épaisses sont constituées des mélanges dont les temps de vulcanisation sont parmi les plus longs et qui donc contribuent à imposer des temps de vulcanisation minimum pour la cuisson globale du pneumatique.

Bien que pour le fonctionnement du pneumatique des temps de cuisson plus courts pourraient être suffisants, il apparaît effectivement qu'il est nécessaire d'augmenter ces temps pour s'assurer de l'absence de formation de bulles dans les mélanges polymériques constituant ces zones.

Les inventeurs se sont ainsi donnés pour mission de fournir des pneumatiques pour véhicules lourds de type "Poids-Lourds", dont les coûts de fabrication sont diminués.

Ce but a été atteint selon l'invention par un pneumatique à armature de carcasse radiale, constituée d'au moins une couche d'éléments de renforcement, ledit pneumatique comprenant une armature de sommet formée d'au moins deux couches de sommet de travail d'éléments de renforcement, croisés d'une couche à l'autre en faisant avec la direction circonférentielle des angles compris entre 10° et 45° et dont les extrémités sont radialement découplées par un mélange polymérique, elle-même coiffée radialement d'une bande de roulement, ladite bande de roulement étant réunie à deux bourrelets par l'intermédiaire de deux flancs, les éléments de renforcement d'au moins une couche de sommet de travail étant des câbles métalliques à couches saturées, au moins une couche interne étant gainée d'une couche constituée d'une composition polymérique telle qu'une composition de caoutchouc et, dans chacune des épaules du pneumatique, au moins le mélange polymérique de découplage au contact des extrémités desdites au moins deux couches de sommet de travail présentant, au test de sorption, une teneur en gaz inférieure à 0.06 $m^3_{STP}$p/$m^3_{ML}$.

Il faut entendre par couches couplées des couches dont les éléments de renforcement respectifs sont séparés radialement d'au plus 1,5 mm, ladite épaisseur de caoutchouc étant mesurée radialement entre les génératrices respectivement supérieure et inférieure desdits éléments de renforcement.

Au sens de l'invention, un mélange polymérique de découplage est un mélange polymérique radialement positionné entre les extrémités des couches de sommet de travail qui assure une distance radiale minimale de 1,5 mm entre les éléments de renforcement respectifs de chacune des couches de travail.

L'unité utilisée pour la teneur en gaz $m^3_{STP}$/$m^3_{ML}$ signifie des mètres cubes de gaz dans les conditions Standards de Température et de Pression pour un mètre cube de mélange. Les conditions standards sont 273.15K pour la température et 1 bar pour la pression.

La teneur en gaz dissous est définie par la solubilité du mélange celle ci étant appréciée par une mesure d'absorption telle que décrite ci-après.

Le test dit de sorption permet de déterminer la solubilité à l'air du mélange testé, par mesure du volume d'air pénétrant dans une éprouvette sous pression constante pendant un temps donné. Le principe du test est de saturer un mélange en gaz à une pression donnée.

Le test est réalisé sur des éprouvettes moulées et vulcanisées ou sur des extraits, obtenus par décorticage, des mélanges de caoutchouc vulcanisés d'au moins deux couches de sommet de travail.

Le test sur éprouvettes moulées est réalisé sur une éprouvette de 3mm d'épaisseur et de 25cm de diamètre, moulée au fond d'un moule, ayant un contact parfait sur le fond de moule. Le moule a un diamètre de 25cm et une profondeur de 4mm permettant donc, après positionnement de l'éprouvette, de disposer d'un volume libre de diamètre 25cm et d'épaisseur 1mm. La mesure est réalisée à 150°C. Un vide prolongé de 2 jours est réalisé pour extraire le gaz du mélange et du volume libre (cette étape nous conduit à une valeur initiale de pression proche de zéro). Puis, une quantité de gaz est injectée dans l'enceinte en imposant 3 bars de pression pendant 10 secondes. La pression dans l'enceinte est ensuite suivie au cours du temps jusqu'à stabilisation. Sa décroissance correspond à l'absorption du gaz dans le mélange. La valeur de solubilité est extraite de la valeur de pression atteinte à l'équilibre. Elle est exprimée en bar$^{-1}$.

La valeur de solubilité est obtenue avec la relation suivante :

$$S = -\frac{V_{enc}}{V_{ML}} \frac{T}{T_0} \frac{P_{enc}^{t=0} - P^{équilibre}}{P_{ML}^{t=0} - P^{équilibre}} \frac{1}{P_0}$$

Avec $V_{enc}$ : le volume libre de l'enceinte ($mm^3$)

$V_{ML}$ : le volume de l'échantillon de mélange ($mm^3$)

$T$ : la température de l'essai (423.15 K)

$T_0$ : la température STP (273.15 K)

$P_{enc}^{t=0}$ : la pression initiale dans l'enceinte (proche de 0 bar)

$P_{ML}^{t=0}$ : la pression initiale dans le mélange (proche de 0 bar)

$P^{équilibre}$ : la pression atteinte à l'équilibre (bar)

$P_0$ : la pression STP (1,01325 bar).

Le test sur extraits, obtenus après décorticage, est réalisé sur une quantité définie d'extraits exprimée en $mm^3$ et déposée au fond du moule. Le moule a un diamètre de 25 cm et une profondeur de 4 mm permettant donc, après positionnement de l'éprouvette, de disposer d'un volume libre obtenu par soustraction du volume total moins le volume d'extrait. La mesure est réalisée à 150°C. Un vide prolongé de 2 jours est réalisé pour extraire le gaz du mélange et du volume libre (cette étape nous conduit à une valeur initiale de pression proche de zéro). Puis, une quantité de gaz est injectée dans l'enceinte en imposant 3 bars de pression pendant 10 secondes. La pression dans l'enceinte est ensuite suivie au cours du temps jusqu'à stabilisation. Sa décroissance correspond à l'absorption du gaz dans le mélange. La valeur de solubilité est extraite de la valeur de pression atteinte à l'équilibre. Elle est exprimée en bar$^{-1}$.

La composition de caoutchouc formant la gaine autour d'au moins une couche interne desdits câbles métalliques d'au moins une couche de sommet de travail peut être non réticulable, réticulable ou réticulée, et est de préférence à base d'au moins un élastomère diénique.

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

Des câbles dits "à couches" (*"layered cords'*) ou "multicouches" sont des câbles constitués d'un noyau central et d'une ou plusieurs couches de brins ou fils pratiquement concentriques disposées autour de ce noyau central.

Au sens de l'invention, une couche saturée d'un câble à couches est une couche constituée de fils dans laquelle il n'existe pas suffisamment de place pour y ajouter au moins un fil supplémentaire.

Des câbles métalliques à couches saturées, dont au moins une couche interne est gainée d'une couche constituée d'une composition polymérique telle qu'une composition de caoutchouc présentent au test dit de perméabilité un débit nul.

Le test dit de perméabilité permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Le test est réalisé sur des câbles extraits directement, par décorticage, des nappes de caoutchouc vulcanisées qu'ils renforcent, donc pénétrés par le caoutchouc cuit.

Le test est réalisé sur 2 cm de longueur de câble, enrobé donc par sa composition de caoutchouc (ou gomme d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 $cm^3$/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de caoutchouc pleine, c'est-à-dire sans câble.

Le débit d'air moyen mesuré (moyenne sur 10 éprouvettes) est d'autant plus faible que l'imperméabilité longitudinale du câble est élevée. La mesure étant faite avec une précision de $\pm$ 0,2 $cm^3$/min, les valeurs mesurées inférieures ou égales à 0,2 $cm^3$/min sont considérées comme nulles ; elles correspondent à un câble qui peut être qualifié d'étanche (totalement étanche) à l'air selon son axe (i.e., dans sa direction longitudinale).

Ce test de perméabilité constitue en outre un moyen simple de mesure indirecte du taux de pénétration du câble par une composition de caoutchouc. Le débit mesuré est d'autant plus faible que le taux de pénétration du câble par le caoutchouc est élevé.

Des câbles présentant au test dit de perméabilité un débit inférieur à 20 cm3/mn présentent un taux de pénétration supérieure à 66%.

Le taux de pénétration d'un câble peut encore être estimé selon la méthode décrite ci-après. Dans le cas d'un câble à couches, la méthode consiste dans un premier temps à éliminer la couche extérieure sur un échantillon d'une longueur comprise entre 2 et 4 cm pour ensuite mesurer selon une direction longitudinale et selon un axe donné la somme des longueurs de mélange caoutchouteux rapporté sur la longueur de l'échantillon. Ces mesures de longueurs de mélange caoutchouteux excluent les espaces non pénétrés sur cet axe longitudinal. Ces mesures sont répétées sur trois axes longitudinaux répartis sur la périphérie de l'échantillon et répétées sur cinq échantillons de câbles.

Lorsque le câble comporte plusieurs couches, la première étape d'élimination est répétée avec la couche nouvellement extérieure et les mesures de longueurs de mélange caoutchouteux selon des axes longitudinaux.

Une moyenne de tous les rapports de longueurs de mélange caoutchouteux sur les longueurs des échantillons ainsi déterminés est ensuite effectuée pour définir le taux de pénétration du câble.

Les inventeurs ont su mettre en évidence qu'un pneumatique ainsi réalisé selon l'invention peut être fabriqué à un coût inférieur comparé aux pratiques usuelles. Il est notamment par exemple possible de diminuer le temps de cuisson dudit pneumatique pour des conditions de température et de pression donnée dans le moule de cuisson. Les inventeurs ont en effet su mettre en évidence que l'utilisation d'éléments de renforcement dans les nappes sommet de travail qui conformément à l'invention sont des câbles métalliques à couches saturées, au moins une couche interne étant gainée d'une couche constituée d'une composition polymérique, permettent du fait de la présence de la gaine d'éviter la présence d'air et donc de prévenir l'apparition de bulles en fin de cuisson.

Les inventeurs ont effectivement mis en évidence que l'air qui peut être présent dans les éléments de renforcement des couches de travail de l'armature de sommet peut venir former des bulles au sein des mélanges caoutchouteux si ces derniers ne sont pas suffisamment rigides pour contenir l'air au sein desdits éléments de renforcement. En effet, lors de la phase de cuisson l'air présent se dilate du fait de la température et cherche à sortir des éléments de renforcement dès lors que la pression de moulage exercée lors de la cuisson est arrêtée. Si les mélanges caoutchouteux sont suffisamment rigides, l'air ne peut pas sortir des éléments de renforcement. Comme expliqué précédemment, cette rigidité suffisante des mélanges caoutchouteux est habituellement obtenue en augmentant le temps de cuisson du pneumatique.

L'absence d'air dans les éléments de renforcement des couches de sommet de travail permet de limiter ce temps de cuisson, la rigidité des mélanges caoutchouteux lorsque la pression de moulage est arrêtée pouvant être moindre que ce qui est habituellement requis.

Les inventeurs ont encore su mettre en évidence que lorsque l'invention n'est pas réalisée telle que décrite mais que seule la caractéristique relative aux éléments de renforcement des couches de sommet de travail est reproduite, une diminution trop importante du temps de cuisson fait apparaître des bulles dont le diamètre est inférieur à celui des bulles observées dont il est fait mention précédemment. Selon les inventeurs, ces bulles proviennent des gaz pouvant être présent au sein des mélanges caoutchouteux.

La réalisation de l'invention dans son ensemble, c'est-à-dire combinant d'une part la caractéristique relative aux éléments de renforcement d'au moins une couche de sommet de travail comme étant des câbles métalliques à couches saturées, au moins une couche interne étant gainée d'une couche constituée d'une composition polymérique et, d'autre part, la caractéristique selon laquelle dans chacune des épaules du pneumatique, au moins le mélange polymérique de découplage au contact des extrémités d'au moins deux couches de sommet de travail présentant une teneur en gaz inférieure à 0.06 $m^3_{STP}/m^3_{ML}$, permet de réduire substantiellement le temps de cuisson des pneumatiques sans voir apparaître une quantité de bulles au sein desdits mélanges polymériques proche des extrémités desdites couches de sommet de travail pouvant altérer les performances du pneumatique.

Comme il vient de l'être expliqué, l'invention permet de fabriquer un pneumatique globalement moins onéreux en diminuant le temps de cuisson car la productivité globale d'une unité de cuisson est améliorée.

Selon l'invention, un pneumatique réalisé conformément à l'invention peut également être fabriqué à un coût inférieur comparé aux pratiques usuelles, par exemple en diminuant la température lors de l'étape de cuisson dudit pneumatique pour des conditions de pression et de temps données dans le moule de cuisson, l'énergie nécessaire à la cuisson étant alors moindre.

Ce gain économique peut encore reposer sur une combinaison d'une diminution du temps de cuisson et d'une diminution de la température pour jouer à la fois sur la productivité et sur le coût énergétique.

Les inventeurs ont encore mis en évidence que lorsque le choix s'oriente vers une diminution de la durée de la cuisson, l'invention conduit en outre à une amélioration de la résistance au roulement. En effet, comme expliqué précédemment, l'apparition des bulles dans les mélanges conduit à augmenter la durée de cuisson des pneumatiques au-delà de ce qui est nécessaire pour un bon fonctionnement du pneumatique. Les inventeurs ont mis en évidence que cette « surcuisson » modifie les propriétés hystérétiques des mélanges. Ainsi, des pneumatiques réalisés conformément à l'invention vont permettre pour un usage donné sur un véhicule de réduire les échauffements des mélanges caoutchouteux et notamment de ceux constitutifs de la bande de roulement.

On notera que la gaine selon l'invention s'étend d'une manière continue autour de la couche qu'elle recouvre (c'est-à-dire que cette gaine est continue dans la direction "orthoradiale" du câble qui est perpendiculaire à son rayon), de manière à former un manchon continu de section transversale qui est avantageusement pratiquement circulaire.

On notera également que la composition de caoutchouc de cette gaine peut être réticulable ou réticulée, c'est-à-dire qu'elle comprend par définition un système de réticulation adapté pour permettre la réticulation de la composition lors de sa cuisson (i.e., son durcissement et non sa fusion) ; ainsi, cette composition de caoutchouc peut être qualifiée d'infusible, du fait qu'elle ne peut pas être fondue par chauffage à quelque température que ce soit.

De préférence, le système de réticulation de la gaine de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus.

La composition de caoutchouc de la gaine selon l'invention comprend, outre ledit système de réticulation, tous les ingrédients habituels utilisables dans les compositions de caoutchouc pour pneumatiques, tels que des charges renforçantes à base de noir de carbone et/ou d'une charge inorganique renforçante telle que silice, des agents anti-vieillissement, par exemple des antioxydants, des huiles d'extension, des plastifiants ou des agents facilitant la mise en oeuvre des compositions à l'état cru, des accepteurs et donneurs de méthylène, des résines, des bismaléimides, des systèmes promoteurs d'adhésion connus du type "RFS" (résorcinol-formaldéhyde-silice) ou sels métalliques, notamment des sels de cobalt.

A titre préférentiel, la composition de cette gaine est choisie identique à la composition utilisée pour la matrice de caoutchouc que les câbles selon l'invention sont destinés à renforcer. Ainsi, il n'y a aucun problème d'incompatibilité éventuelle entre les matériaux respectifs de la gaine et de la matrice de caoutchouc.

Selon une variante de l'invention, lesdits câbles d'au moins une couche de sommet de travail sont des câbles à couches de construction [L+M], comportant une première couche C1 à L fils de diamètre $d_1$ enroulés ensemble en hélice selon un pas $p_1$ avec L allant de 1 à 4, entourée d'au moins une couche intermédiaire C2 à M fils de diamètre $d_2$ enroulés ensemble en hélice selon un pas $p_2$ avec M allant de 3 à 12, une gaine constituée d'une composition de caoutchouc non réticulable, réticulable ou réticulée à base d'au moins un élastomère diénique, recouvrant, dans la construction ladite première couche C1.

De préférence, le diamètre des fils de la première couche de la couche interne (C1) est compris entre 0.10 et 0.5 mm et le diamètre des fils de la couche externe (C2) est compris entre 0.10 et 0.5 mm.

De préférence encore, le pas d'hélice $p_2$ d'enroulement desdits fils de la couche externe (C2) est compris entre 8 et 25 mm.

Au sens de l'invention, le pas d'hélice représente la longueur, mesurée parallèlement à l'axe du câble, au bout de laquelle un fil ayant ce pas effectue un tour complet autour de l'axe du câble ; ainsi, si l'on sectionne l'axe par deux plans perpendiculaires audit axe et séparés par une longueur égale au pas d'un fil d'une couche constitutive du câble, l'axe de ce fil a dans ces deux plans la même position sur les deux cercles correspondant à la couche du fil considéré.

Avantageusement, le câble présente l'une, et plus préférentiellement encore l'ensemble des caractéristiques suivantes qui est vérifié(e) :

- la couche C2 est une couche saturée, c'est-à-dire qu'il n'existe pas suffisamment de place dans cette couche pour y ajouter au moins un (N+1)ème fil de diamètre $d_2$, N représentant alors le nombre maximal de fils enroulables en une couche autour de la couche C1;
- la gaine de caoutchouc recouvre en outre la couche interne C1 et/ou sépare les fils deux à deux adjacents de la couche externe C2 ;
- la gaine de caoutchouc recouvre pratiquement la demi-circonférence radialement intérieure de chaque fil de la couche C2, de telle sorte qu'elle sépare les fils deux à deux adjacents de cette couche C2.

De préférence, la gaine de caoutchouc présente une épaisseur moyenne allant de 0,010 mm à 0,040 mm.

D'une manière générale, lesdits câbles selon l'invention peuvent être réalisés avec tout type de fils métalliques, notamment en acier, par exemple des fils en acier au carbone et/ou des fils en acier inoxydable. On utilise de préférence un acier au carbone, mais il est bien entendu possible d'utiliser d'autres aciers ou d'autres alliages.

Lorsqu'un acier au carbone est utilisé, sa teneur en carbone (% en poids d'acier) est de préférence comprise entre 0,1% et 1,2%, plus préférentiellement de 0,4% à 1,0% ; ces teneurs représentent un bon compromis entre les propriétés mécaniques requises pour le pneumatique et la faisabilité du fil. Il est à noter qu'une teneur en carbone comprise entre 0,5% et 0,6% rend de tels aciers finalement moins coûteux car plus faciles à tréfiler. Un autre mode avantageux de réalisation de l'invention peut consister aussi, selon les applications visées, à utiliser des aciers à faible teneur en carbone, comprise par exemple entre 0,2% et 0,5%, en raison notamment d'un coût plus bas et d'une plus grande facilité de tréfilage.

Lesdits câbles selon l'invention pourront être obtenus selon différentes techniques connues de l'homme du métier, par exemple en deux étapes, tout d'abord par gainage via une tête d'extrusion de l'âme ou couches C1, étape suivie dans un deuxième temps d'une opération finale de câblage ou retordage des M fils restants (couche C2) autour de la couche C1 ainsi gainée. Le problème de collant à l'état cru posé par la gaine de caoutchouc, lors des opérations intermédiaires éventuelles de bobinage et débobinage pourra être résolu de manière connue par l'homme du métier, par exemple par l'emploi d'un film intercalaire en matière plastique.

De tels câbles d'au moins une couche de sommet de travail sont par exemple choisis parmi les câbles décrits dans les demandes de brevet WO 2006/013077 et WO 2009/083212.

Selon un premier mode de réalisation de l'invention, au moins le mélange polymérique de découplage au contact des extrémités desdites au moins deux couches de sommet de travail est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :

(i) soit par du noir de carbone de surface spécifique BET inférieure à 60 $m^2$/g, employé à un taux compris entre 20 et 80 pce, et de préférence entre 40 et 60 pce,

(ii) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique comprise entre 30 et 260 $m^2$/g employée à un taux compris entre 20 et 80 pce, et de préférence entre 40 et 60 pce,

(iii) soit par un coupage de noir de carbone décrit en (i) et une charge blanche décrite en (ii), dans lequel le taux global de charge est compris entre 20 et 80 pce, et de préférence entre 40 et 60 pce.

La mesure de surface spécifique BET est effectuée selon la méthode de BRUNAUER, EMMET et TELLER décrite dans "The Journal of the American Chemical Society", vol. 60, page 309, février 1938, correspondant à la norme NFT 45007 de novembre 1987.

Dans le cas d'utilisation de charge claire, il est nécessaire d'utiliser un agent de couplage et/ou de recouvrement choisi parmi les agents connus de l'homme de l'art. Comme exemples d'agents de couplage préférentiel, on peut citer les alcoxysilanes sulfurés du type polysulfure de bis-(3-trialcoxysilylpropyle), et parmi ceux-ci notamment le tétrasulfure de bis-(3-triéthoxysilylpropyle) commercialisé par la Société DEGUSSA sous les dénominations Si69 pour le produit liquide pur et X50S pour le produit solide (coupage 50/50 en poids avec du noir N330). Comme exemples d'agents de recouvrement on peut citer un alcool gras, un alkylalcoxysilane tel qu'un hexadécyltriméthoxy ou triéthoxysilane respectivement commercialisés par la Société DEGUSSA sous les dénominations Si116 et Si216, la diphénylguanidine, un polyéthylène glycol, une huile silicone éventuellement modifié au moyen des fonctions OH ou alcoxy. L'agent de recouvrement et/ou de couplage est utilisé dans un rapport pondéral par rapport à la charge $\geq$ à 1/100 et $\leq$ à 20/100, et préférentiellement compris entre 2/100 et 15/100 lorsque la charge claire représente la totalité de la charge renforçante et compris entre 1/100 et 20/100 lorsque la charge renforçante est constituée par un coupage de noir de carbone et de charge claire.

Comme autres exemples de charges renforçantes ayant la morphologie et les fonctions de surface SiOH et/ou AlOH des matières de type silice et/ou alumine précédemment décrites et pouvant être utilisées selon l'invention en remplacement partiel ou total de celles-ci, on peut citer les noirs de carbone modifiés soit au cours de la synthèse par addition à l'huile d'alimentation du four d'un composé du silicium et/ou d'aluminium soit après la synthèse en ajoutant, à une suspension aqueuse de noir de carbone dans une solution de silicate et/ou d'aluminate de sodium, un acide de façon à recouvrir au moins partiellement la surface du noir de carbone de fonctions SiOH et/ou AlOH. Comme exemples non limitatifs de ce type de charges carbonées avec en surface des fonctions SiOH et/ou AlOH, on peut citer les charges type CSDP décrites dans la Conférence N° 24 du Meeting ACS, Rubber Division, Anaheim, Californie, 6-9 mai 1997 ainsi que celles de la demande de brevet EP-A-0 799 854.

Lorsqu'une charge claire est utilisée comme seule charge renforçante, les propriétés d'hystérèse et de cohésion sont obtenues en utilisant une silice précipitée ou pyrogénée, ou bien une alumine précipitée ou bien encore un aluminosilicate de surface spécifique BET comprise entre 30 et 260 m$^2$/g. Comme exemples non limitatifs de ce type de charge, on peut citer les silices KS404 de la Société Akzo, Ultrasil VN2 ou VN3 et BV3370GR de la Société Degussa, Zeopol 8745 de la Société Huber, Zeosil 175MP ou Zeosil 1165MP de la société Rhodia, HI-SIL 2000 de la Société PPG etc...

Parmi les élastomères diéniques pouvant être utilisés en coupage avec le caoutchouc naturel ou un polyisoprène synthétique à majorité d'enchaînements cis-1,4, on peut citer un polybutadiène (BR) de préférence à majorité d'enchaînements cis-1,4, un copolymère styrène-butadiène (SBR) solution ou émulsion, un copolymère butadiène-isoprène (BIR) ou bien encore un terpolymère styrène-butadiène-isoprène (SBIR). Ces élastomères peuvent être des élastomères modifiés en cours de polymérisation ou après polymérisation au moyen d'agents de ramification comme un divinylbenzène ou d'agents d'étoilage tels que des carbonates, des halogénoétains, des halogénosiliciums ou bien encore au moyen d'agents de fonctionnalisation conduisant à un greffage sur la chaîne ou en bout de chaîne de fonctions oxygénées carbonyle, carboxyle ou bien d'une fonction amine comme par exemple par action de la diméthyl ou de la diéthylamino benzophénone. Dans le cas de coupages de caoutchouc naturel ou de polyisoprène synthétique à majorité d'enchaînements cis-1,4 avec un ou plusieurs des élastomères diéniques, mentionnés ci-dessus, le caoutchouc naturel ou le polyisoprène synthétique est utilisé de préférence à un taux majoritaire et plus préférentiellemnt à un taux supérieur à 70 pce.

Selon ce premier mode de réalisation de l'invention, le mélange polymérique de découplage au contact des extrémités d'au moins deux couches de sommet de travail présente une quantité de gaz solubilisé réduite par rapport à des mélanges usuels pour ce type de poste dans le pneumatique.

De tels mélanges qui sont connus de l'homme du métier ne sont habituellement pas utilisés pour cette fonction du fait de leur faible cohésion lors de l'échauffement de la zone du pneumatique aux extrémités des couches de sommet de travail. Les inventeurs ont encore su mettre en évidence qu'un compromis échauffement cohésion amélioré était atteint avec les pneumatiques ainsi réalisés selon l'invention. En effet, les gains obtenus en ce qui concerne les propriétés hystérétiques des différents mélanges constitutifs du pneumatique du fait de la durée de cuisson réduite permettent de limiter l'échauffement de la zone du pneumatique aux extrémités des couches de sommet de travail pour un usage donné et ainsi améliorer la cohésion des mélanges décrits précédemment et conserver une endurance du pneumatique satisfaisante.

Un autre mode de réalisation de l'invention permettant d'obtenir des mélanges polymériques de découplage au contact des extrémités d'au moins deux couches de sommet de travail présentant une quantité de gaz solubilisé réduite par rapport à des mélanges usuels pour ce type de poste dans le pneumatique peut consister à réaliser un étuvage desdits mélanges, quelle que soit leur composition, juste avant de les mettre en place lors de la fabrication du pneumatique. Une telle variante de réalisation est toutefois plus complexe en termes de procédé de fabrication.

Selon l'un ou l'autre de ces modes de réalisation de l'invention, le choix des mélanges polymériques de découplage peut être validé par une mesure de « limite bullage » selon un test décrit ci-après, la « limite bullage » devant être inférieure à 2 min.

Le test consiste à cuire un échantillon de mélange cru présentant un diamètre de 36 mm et une épaisseur de 3mm dans un moule maintenu à une pression de 16 bars à une température de 145° pendant un certain temps. La « limite bullage » est le temps nécessaire à partir duquel il ne se forme pas de bulles au sein des mélanges. Cette mesure permet d'estimer en relatif la sensibilité du mélange à buller, c'est donc un compromis entre la quantité de gaz disponible à haute température au sein du matériau et l'aptitude du mélange à vulcaniser.

Selon l'un ou l'autre de ces modes de réalisation de l'invention, le choix des mélanges polymériques de découplage peut encore être validé par une mesure de pression « critique » selon un test décrit ci-après, la pression « critique » devant être inférieure à 1.25 bars.

Le test consiste à cuire un échantillon de mélange cru présentant un diamètre de 36 mm et une épaisseur de 3 mm dans un moule maintenu à une certaine pression à une température de 145° pendant 20 minutes. La pression « critique » est la pression à partir de laquelle il ne se forme pas de bulles au sein des mélanges. Cette mesure permet d'estimer en relatif la quantité de gaz disponible à haute température au sein du matériau.

Selon une variante de réalisation de l'invention, au moins le mélange polymérique de découplage au contact des extrémités d'au moins deux couches de sommet de travail est un mélange dont la rigidité avant la phase de cuisson, ou rigidité à cru, est supérieure à celle des mélanges usuels pour ce type de poste dans le pneumatique.

Selon une autre variante de réalisation de l'invention, au moins le mélange polymérique de découplage au contact des extrémités d'au moins deux couches de sommet de travail est un mélange dont le temps de fixation ou la phase retard, c'est-à-dire le temps avant le début de la vulcanisation lors de la phase de cuisson est inférieur à celui des mélanges usuels pour ce type de poste dans le pneumatique. Ces temps peuvent notamment varier en fonction des dimensions et de la constitution des pneumatiques.

Selon d'autres variantes de réalisation de l'invention, au moins le mélange polymérique de découplage au contact des extrémités d'au moins deux couches de sommet de travail est obtenue par une combinaison d'un mélange polymérique présentant une quantité de gaz solubilisé réduite par rapport à des mélanges usuels et/ou un mélange polymérique dont la rigidité avant la phase de cuisson, ou rigidité à cru, est supérieure à celle des mélanges usuels et/ou un mélange polymérique dont le temps de fixation est inférieur à celui des mélanges usuels.

Selon d'autres variantes de réalisation de l'invention, l'armature de sommet comporte encore au moins une couche d'éléments de renforcement circonférentiels.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

Les éléments de renforcement de ces couches de sommet tels que notamment ceux des couches de protection ou des couches de triangulation peuvent être semblables à ceux décrits précédemment pour les couches de sommet de travail.

Selon un mode de réalisation préférée de l'invention, les éléments de renforcement d'au moins une couche de l'armature de carcasse sont des câbles métalliques présentant au test dit de perméabilité un débit inférieur 20 cm$^3$/mn.

Les câbles de l'armature de carcasse qui sont soumis à des phénomènes de "fretting-fatigue-corrosion" peuvent ainsi présenter une meilleure résistance à ces phénomène d'usure et de fatigue et donc contribuer à améliorer l'endurance du pneumatique notamment utilisée dans des conditions extrêmes.

De préférence encore, les câbles d'au moins une couche de l'armature de carcasse présentent au test dit de perméabilité un débit inférieur à 10 cm$^3$/mn et de préférence encore inférieur à 2 cm$^3$/mn.

Selon un mode de réalisation avantageux de l'invention, lesdits éléments de renforcement métalliques présentant au test dit de perméabilité un débit inférieur à 20 cm$^3$/mn d'au moins une couche de l'armature de carcasse sont

EP 2 741 925 B1

des câbles à au moins deux couches, au moins une couche interne étant gainée d'une couche constituée d'une composition polymérique telle qu'une composition de caoutchouc non réticulable, réticulable ou réticulée, de préférence à base d'au moins un élastomère diénique. Lesdits câbles présentent alors au test dit de perméabilité un débit nul.

Selon une variante de l'invention, les éléments de renforcement d'au moins une couche de l'armature de carcasse, présentant au test dit de perméabilité un débit inférieur à 20 cm$^3$/mn sont des câbles métalliques à couches de construction [L+M] ou [L+M+N], comportant une première couche C1 à L fils de diamètre $d_1$ enroulés ensemble en hélice selon un pas $p_1$ avec L allant de 1 à 4, entourée d'au moins une couche intermédiaire C2 à M fils de diamètre $d_2$ enroulés ensemble en hélice selon un pas $p_2$ avec M allant de 3 à 12, ladite couche C2 étant éventuellement entourée d'une couche externe C3 de N fils de diamètre $d_3$ enroulés ensemble en hélice selon un pas $p_3$ avec N allant de 8 à 20, une gaine constituée d'une composition polymérique telle qu'une composition de caoutchouc non réticulable, réticulable ou réticulée à base d'au moins un élastomère diénique, recouvrant, dans la construction [L+M], ladite première couche C1 et, dans la construction [L+M+N], au moins ladite couche C2.

Dans le cas d'une armature de carcasse comportant plusieurs couches d'éléments de renforcement, chacune desdites couches peut comporter de tels câbles. Avantageusement au moins la couche radialement extérieure comporte des câbles métalliques présentant au test dit de perméabilité un débit inférieur 20 cm$^3$/mn.

D'autres détails et caractéristiques avantageux de l'invention ressortiront ci-après de la description des exemples de réalisation de l'invention en référence aux figures 1 à 3 qui représentent :

- figure1, une vue méridienne d'un schéma d'un pneumatique selon un mode de réalisation de l'invention,

- figure 2, une représentation schématique d'une vue en coupe d'un premier exemple de câble de couche de travail du pneumatique de la figure 1,

- figure 3, une représentation schématique d'une vue en coupe d'un deuxième exemple de câble de couche de travail du pneumatique de la figure 1.

Les figures ne sont pas représentées à l'échelle pour en simplifier la compréhension.

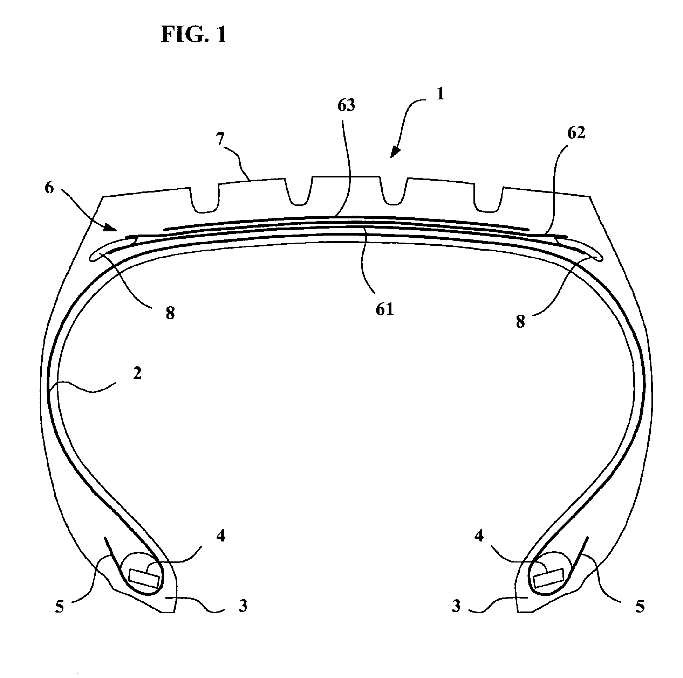

Sur la figure 1, le pneumatique 1, de dimension 315/80 R 22.5, comprend une armature de carcasse radiale 2 ancrée dans deux bourrelets 3. L'armature de carcasse 2 est formée d'une seule couche de câbles métalliques enroulée autour d'une tringle 4 pour former un retournement 5. L'armature de carcasse 2 est frettée par une armature de sommet 6, elle-même coiffée d'une bande de roulement 7. L'armature de sommet 6 est formée radialement de l'intérieur à l'extérieur :

- d'une première couche de travail 61 formée de câbles métalliques inextensibles 3+9x0.30 non frettés conformes à l'invention, continus sur toute la largeur de la nappe, orientés d'un angle égal à 18°,

- d'une seconde couche de travail 62 formée de câbles métalliques inextensibles 3+9x0.30 non frettés conformes à l'invention, continus sur toute la largeur de la nappe, orientés d'un angle égal à 18° et croisés avec les câbles métalliques de la première couche de travail,

- d'une couche de protection 53 formées de câbles métalliques élastiques 3x2x0.35.

La couche d'armature de carcasse 2 est enroulée autour d'une tringle 4 pour former un retournement 5.
Les extrémités des couches de travail 61 et 62 sont découplées par des profilés de mélange caoutchouteux 8.
Conformément à l'invention, les profilés de mélange caoutchouteux 8 présentent la composition suivante :

|  | COMPOSITION (en parties pour 100 d'élastomère) |
|---|---|
| Caoutchouc naturel | 100 |
| Noir N683 | 56 |
| Abiétate de Cobalt | 4,5 |
| Antioxydant (6PPD) | 1,8 |
| Acide stéarique / Oxyde de zinc | 0,6 / 7,5 |
| Soufre / Accélérateur (DCBS) | 5,6 / 0,8 |
| Pression critique | 0,75 bar |

9

Le noir N683 présente une surface spécifique BET égale à 37 m$^2$/g. La référence du noir correspond à un grade ASTM.

Le tableau ci-dessus indique également la pression critique du mélange caoutchouteux 8 qui est un indicateur de la quantité de gaz contenue dans le mélange.

Les profilés de mélange caoutchouteux 8 présentent, au test de sorption, une teneur en gaz égale à 0.045 m$^3$$_{STP}$/m$^3$$_{ML}$.

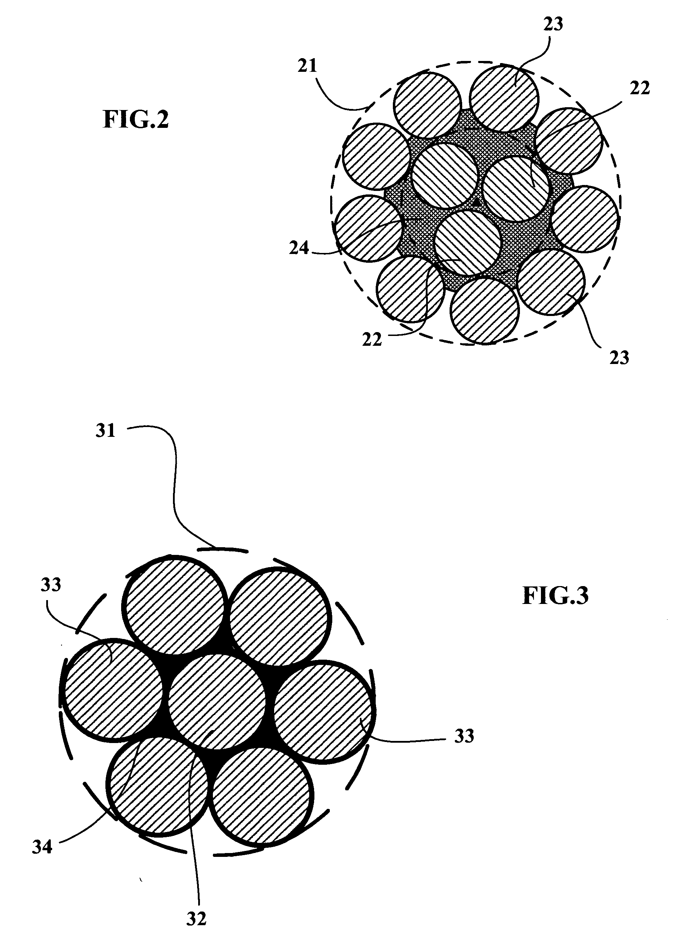

La figure 2 illustre une représentation schématique de la section d'un câble 21 d'une couche de travail de l'armature sommet pouvant être utilisé dans un pneumatique selon l'invention. Ce câble 21 est un câble à couche de structure 3+9, non fretté, constitué d'une âme centrale formée d'un câble constitué de trois fils 22 retordus entre eux et d'une couche externe formée de neuf fils 23.

Il présente les caractéristiques suivantes (d et p en mm) :

- structure 3+9 ;
- $d_1$ = 0.30 (mm);
- $p_1$=15.4(mm)
- ($d_1/d_2$) = 1 ;
- $d_2$ = 0.30(mm);
- $p_2$=15.4(mm),

avec $d_1$, p1, respectivement le diamètre et le pas d'hélice des fils de l'âme centrale et $d_2$ et $p_2$, respectivement le diamètre et le pas de d'hélice des fils de la couche externe.

L'âme centrale constituée d'un câble formé des trois fils 22 a été gainée par une composition de caoutchouc 24 à base d'élastomère diénique non vulcanisé (à l'état cru). Le gainage est obtenu via une tête d'extrusion du câble 22, suivi d'une opération finale de câblage des 9 fils 23 autour de l'âme ainsi gainée.

L'aptitude à la pénétration du câble 31, mesurée selon la méthode décrite précédemment, est égale à 95 %.

La figure 3 illustre une représentation schématique de la section d'un autre câble 31 d'une couche de travail de l'armature sommet pouvant être utilisé dans un pneumatique selon l'invention. Ce câble 31 est un câble à couche de structure 1+6, non fretté, constitué d'un noyau central formé d'un fil 32 et d'une couche externe formée de six fils 33.

Il présente les caractéristiques suivantes (d et p en mm) :

- structure 1+6 ;
- $d_1$ = 0,35 (mm);
- ($d_1/d_2$) = 1 ;
- $d_2$ = 0,35 (mm);
- $p_2$=15.4(mm),

avec $d_1$, le diamètre du noyau et $d_2$ et $p_2$, respectivement le diamètre et le pas d'hélice des fils de la couche externe.

Le noyau central constitué du fil 32 a été gainé par une composition de caoutchouc 34 à base d'élastomère diénique non vulcanisé (à l'état cru). Le gainage est obtenu via une tête d'extrusion du fil 32, suivi d'une opération finale de câblage des 6 fils 33 autour du noyau ainsi gainé.

L'aptitude à la pénétration du câble 31, mesurée selon la méthode décrite précédemment, est égale à 95 %.

Des essais ont été réalisés avec des pneumatiques réalisés selon l'invention conformément à la représentation des figures 1 et 2 et d'autres avec des pneumatiques dits de référence.

Les premiers pneumatiques de référence diffèrent des pneumatiques selon l'invention par une armature de sommet dont les éléments de renforcement des couches de travail sont des câbles métalliques 11.35 non frettés qui ne comportent pas de couche de gainage. Contrairement aux câbles selon l'invention, ces câbles contiennent de l'air.

Des premiers pneumatiques de référence R1 diffèrent encore des pneumatiques selon l'invention par des profilés de mélange caoutchouteux 8 présentant la composition suivante :

|  | COMPOSITION (en parties pour 100 d'élastomère) |
|---|---|
| Caoutchouc naturel | 100 |
| Noir N347 | 50 |
| Abiétate de Cobalt | 4,5 |
| Antioxydant (6PPD) | 1,8 |
| Acide stéarique / Oxyde de zinc | 0,6 / 7,5 |
| Soufre / Accélérateur (DCBS) | 5,6 / 0,8 |

(suite)

| | COMPOSITION (en parties pour 100 d'élastomère) |
|---|---|
| Pression critique | 1,5 bar |

Le noir N347 présente une surface spécifique BET égale à 90 m$^2$/g.

Les profilés de mélange caoutchouteux 8 présentent, au test de sorption, une teneur en gaz égale à 0.075 m$^3_{STP}$/m$^3_{ML}$.

Les deuxièmes pneumatiques de référence R2 diffèrent des pneumatiques selon l'invention par des profilés de mélange caoutchouteux 8 présentant une composition identique à celle des premiers pneumatiques de référence.

Les éléments de renforcement des couches de travail de ces deuxièmes pneumatiques de référence sont des câbles métalliques identiques à ceux des pneumatiques réalisés selon l'invention.

Des essais de cuisson des différents pneumatiques ont été réalisés pour déterminer la durée minimum possible sans voir apparaître de bulles au sein des mélanges caoutchouteux aux extrémités des couches de travail.

Les résultats sont donnés dans le tableau suivant :

| Pneumatiques | Durée cuisson (en minutes) |
|---|---|
| R1 | 40.5 |
| R2 | 36 |
| Invention | 34.5 |

Il ressort de cet exemple que le gain obtenu selon l'invention qui combine d'une part la caractéristique relative aux éléments de renforcement des couches de sommet de travail comme étant des câbles métalliques à couches saturées, au moins une couche interne étant gainée d'une couche constituée d'une composition polymérique telle qu'une composition de caoutchouc et, d'autre part, la caractéristique selon laquelle dans chacune des épaules du pneumatique, au moins un mélange polymérique au contact des extrémités d'au moins deux couches de sommet de travail présentant, au test de sorption, une teneur en gaz inférieure à 0.06 m$^3_{STP}$/m$^3_{ML}$, permet de réduire le temps de cuisson des pneumatiques de l'ordre de 15 % par rapport à des pneumatiques usuels correspondant aux pneumatiques de référence R1 sans voir apparaître aucune bulle au sein desdits mélanges polymériques proche des extrémités desdites couches de sommet de travail.

Par ailleurs, il faut noter que dans le cas des pneumatiques de référence R2, si l'on réduit le temps de cuisson en dessous de 36 minutes, il apparaît au sein des mélanges polymériques un nombre important de bulles dont le diamètre moyen est inférieur à celui des bulles qui apparaissent dans le cas du pneumatique de référence R1 lorsque l'on réduit le temps de cuisson en dessous de 40.5 minutes.

Des essais d'endurance ont été réalisés sur une machine de test imposant à chacun des pneumatiques un roulage ligne droite à une vitesse égale à l'indice de vitesse maximum prescrit pour ledit pneumatique (speed index) sous une charge initiale de 4000 Kg progressivement augmentée pour réduire la durée du test.

Les essais ont été réalisés pour les pneumatiques selon l'invention avec des conditions identiques à celles appliquées aux pneumatiques de référence R1.

Les essais réalisés conduisent pour les pneumatiques R1 à des performances établissant la base 100. Les tests sont arrêtés lors de l'apparition d'une dégradation du pneumatique.

Les résultats sont donnés dans le tableau suivant :

| Pneumatiques | Kilométrages |
|---|---|
| R1 | 100 |
| Invention | 109 |

Ces résultats montrent que les pneumatiques selon l'invention sont au moins aussi bon que les pneumatiques de référence voire légèrement meilleurs.

Des mesures de résistance au roulement ont montré que les pneumatiques selon l'invention conduisent en comparaison des pneumatiques de référence R1 à un gain de l'ordre de 0.4 Kg/T.

Les mesures effectuées sont reprises dans le tableau suivant :

| Pneumatiques | Résistance au roulement |
|---|---|
| R1 | 5.92 Kg/T |
| Invention | 5.55 Kg/T |

**Revendications**

1. Pneumatique (1) à armature de carcasse radiale (2), constituée d'au moins une couche d'éléments de renforcement, ledit pneumatique comprenant une armature de sommet (6) formée d'au moins deux couches de sommet de travail (61, 62) d'éléments de renforcement, croisés d'une couche à l'autre en faisant avec la direction circonférentielle des angles compris entre 10° et 45°, elle-même coiffée radialement d'une bande de roulement (7), ladite bande de roulement étant réunie à deux bourrelets (3) par l'intermédiaire de deux flancs, les éléments de renforcement d'au moins une couche de sommet de travail (61, 62) étant des câbles métalliques (21, 31) à couches saturées, au moins une couche interne étant gainée d'une couche (24, 34) constituée d'une composition polymérique telle qu'une composition de caoutchouc, **caractérisé en ce que** les extrémités d'au moins deux couches de sommet de travail (61, 62) sont radialement découplées par un mélange polymérique (8) et **en ce que**, dans chacune des épaules du pneumatique, au moins le mélange polymérique (8) de découplage au contact des extrémités d'au moins deux couches de sommet de travail (61, 62) présente, au test de sorption, une teneur en gaz inférieure à $0.06\ m^3_{STP}/m^3_{ML}$.

2. Pneumatique (1) selon la revendication 1, **caractérisé en ce que** lesdits éléments de renforcement d'au moins une couche de sommet de travail (6, 62) sont des câbles métalliques (21, 31) à couches de construction [L+M], comportant une première couche C1 à L fils (22, 32) de diamètre $d_1$ enroulés ensemble en hélice selon un pas $p_1$ avec L allant de 1 à 4, entourée d'une couche externe C2 à M fils (23, 33) de diamètre $d_2$ enroulés ensemble en hélice selon un pas $p_2$ avec M allant de 3 à 12, et **en ce qu'**une gaine (24, 34) constituée d'une composition de caoutchouc non réticulable, réticulable ou réticulée à base d'au moins un élastomère diénique, recouvre ladite première couche C1.

3. Pneumatique (1) selon la revendication 2, **caractérisé en ce que** le diamètre des fils (22, 32) de la première couche C1 est compris entre 0.10 et 0.5 mm, et **en ce que** le diamètre des fils (23, 33) de la couche C2 est compris entre 0.10 et 0.5 mm.

4. Pneumatique (1) selon l'une des revendications 2 ou 3, **caractérisé en ce que** la gaine de caoutchouc (24, 34) présente une épaisseur moyenne allant de 0,010 mm à 0,040 mm.

5. Pneumatique (1) selon l'une des revendications précédentes, **caractérisé en ce que** au moins le mélange polymérique de découplage (8) au contact des extrémités d'au moins deux couches de sommet de travail (61, 62) est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :

   (i) soit par du noir de carbone de surface spécifique BET inférieur à 60 $m^2/g$, employé à un taux compris entre 20 et 80 pce,
   (ii) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique comprise entre 30 et 260 $m^2/g$ employée à un taux compris entre 20 et 80 pce,
   (iii) soit par un coupage de noir de carbone décrit en (i) et une charge blanche décrite en (ii), dans lequel le taux global de charge est compris entre 20 et 80 pce.

6. Pneumatique (1) selon l'une des revendications précédentes, **caractérisé en ce que** au moins le mélange polymérique de découplage (8) au contact des extrémités d'au moins deux couches de sommet de travail (61, 62) est étuvé juste avant d'être mis en place lors de la fabrication du pneumatique.

7. Pneumatique (1) selon l'une des revendications précédentes, **caractérisé en ce que** l'armature de sommet (6) comporte au moins une couche d'éléments de renforcement circonférentiels.

8. Pneumatique (1) selon l'une des revendications précédentes, **caractérisé en ce que** les éléments de renforcement d'au moins une couche de l'armature de carcasse (2) sont des câbles métalliques présentant au test dit de perméabilité un débit inférieur 20 cm3/mn.

**Patentansprüche**

1. Reifen (1) mit radialer Karkassenbewehrung (2), die aus mindestens einer Schicht von Verstärkungselementen besteht, wobei der Reifen eine Scheitelbewehrung (6) aufweist, die aus mindestens zwei Arbeitsscheitelschichten (61, 62) aus Verstärkungselementen gebildet ist, die sich von einer Lage zur anderen kreuzen, indem sie mit der Umfangsrichtung Winkel zwischen 10° und 45° bilden, die selbst radial von einem Laufstreifen (7) überdeckt wird, wobei der Laufstreifen mittels zweier Flanken mit zwei Wülsten (3) verbunden wird, wobei die Verstärkungselemente von mindestens einer Arbeitsscheitelschicht (61, 62) Drahtseile (21, 31) mit gesättigten Schichten sind, wobei mindestens eine innere Schicht mit einer Schicht (24, 34) ummantelt ist, die aus einer Polymerzusammensetzung, wie eine Kautschukzusammensetzung gebildet ist, **dadurch gekennzeichnet, dass** die Enden von mindestens zwei Arbeitsscheitelschichten (61, 62) radial von einer Polymermischung (8) entkoppelt sind und, dass in jeder der Schultern des Reifens mindestens die Polymermischung (8) der Entkopplung im Kontakt mit den Enden von mindestens zwei Arbeitsscheitelschichten (61, 62) beim Sorptionstest einen Gasgehalt von weniger als 0,06 $m^3STP/m^3ML$ aufweist.

2. Reifen (1) nach dem Anspruch 1, **dadurch gekennzeichnet, dass** die Verstärkungselemente von mindestens einer Arbeitsscheitelschicht (61, 62) Drahtseile (21, 31) mit Konstruktionsschichten [L + M] sind, die eine erste Schicht C1 mit L Drähten (22, 32) mit einem Durchmesser $d_1$ aufweisen, die spiralförmig mit einer Steigung $p_1$ zusammengewickelt sind, wobei L zwischen 1 bis 4 beträgt, die von einer Außenschicht C2 mit M Drähten (23, 33) von einem Durchmesser $d_2$ umgeben sind, die spiralförmig mit einer Steigung $p_2$ zusammengewickelt sind, wobei M zwischen 3 bis 12 beträgt, und, dass ein Mantel (24, 34), der aus einer nichtvernetzbaren, vernetzbaren oder vernetzten Kautschukzusammensetzung auf der Basis mindestens eines Dienelastomers besteht, die Schicht C1 bedeckt.

3. Reifen (1) nach Anspruch 2, **dadurch gekennzeichnet, dass** der Durchmesser der Drähte (22, 32) der ersten Schicht C1 zwischen 0,10 et 0,5 mm beträgt, und, dass der Durchmesser der Drähte (23, 33) der Schicht C2 zwischen 0,10 et 0,5 mm beträgt.

4. Reifen (1) nach einem der Ansprüche 2 oder 3, **dadurch gekennzeichnet, dass** der Mantel aus Kautschuk (24, 34) eine mittlere Dicke von 0,010 mm bis 0,040 mm aufweist.

5. Reifen (1) nach einem der vorhergehenden Ansprüche, **dadurch gekennzeichnet, dass** mindestens die Polymermischung der Entkopplung (8) in Kontakt mit den Enden von mindestens zwei Arbeitsscheitelschichten (61, 62) eine Elastomermischung auf Basis von Naturkautschuk oder von synthetischem Polyisopren mit vorherrschend cis-1,4-Verkettungen und gegebenenfalls von mindestens einem anderen Dienelastomer, wobei der Naturkautschuk oder das synthetische Polyisopren beim Verschnitt in einer höheren Konzentration im Vergleich zu der Konzentration des anderen oder der anderen Dienelastomere, die verwendet werden, vorhanden ist, und von einem verstärkenden Füllstoff ist, bestehend:

(i) entweder aus Ruß mit spezifischer BET-Oberfläche von weniger als 60 $m^2/g$, der mit einer Dosierung zwischen 20 und 80 phr verwendet ist,
(ii) oder aus einem weißen Füllstoff auf Siliciumdioxid-/ oder Aluminiumoxid-Basis mit SiOH- und/oder AlOH-Oberflächenfunktionen, der aus der Gruppe der gefällten oder pyrogenen Siliciumdioxide, Aluminiumoxide oder Alumosilikate oder auch der Ruße ausgewählt ist, die während oder nach der Synthese der spezifischen Oberfläche, die zwischen 30 und 260 $m^2/g$ beträgt, die mit einer Dosierung zwischen 20 und 80 phr verwendet wird, modifiziert worden sind.
(iii) oder aus einem Verschnitt aus Ruß, der in (i) beschrieben ist, und einem weißen Füllstoff, der in (ii) beschrieben ist, wobei die Gesamtdosierung des Füllstoffs zwischen 20 und 80 phr beträgt.

6. Reifen (1) nach einem der vorhergehenden Ansprüche, **dadurch gekennzeichnet, dass** mindestens die Polymermischung der Entkopplung (8) in Kontakt mit den Enden von mindestens zwei Arbeitsscheitelschichten (61, 62) unmittelbar bevor sie während der Herstellung des Reifens eingesetzt wird, getrocknet wird.

7. Reifen (1) nach einem der vorhergehenden Ansprüche, **dadurch gekennzeichnet, dass** die Scheitelbewehrung (6) mindestens eine Schicht in Umfangsrichtung verlaufender Verstärkungselemente aufweist.

8. Reifen (1) nach einem der vorhergehenden Ansprüche, **dadurch gekennzeichnet, dass** die Verstärkungselemente von mindestens einer Schicht der Karkassenbewehrung (2) Drahtseile sind, die bei dem sogenannten Durchlässigkeitstest einen Durchsatz von weniger als 20 cm$^3$/min aufweisen.

**Claims**

1. Tyre (1) with a radial carcass reinforcement (2), consisting of at least one layer of reinforcing elements, the said tyre comprising a crown reinforcement (6) formed of at least two working crown layers (61, 62) of reinforcing elements which are crossed from one layer to the other making with the circumferential direction angles of between 10° and 45°, itself capped radially by a tread (7), the said tread being connected to two beads (3) via two sidewalls, the reinforcing elements of at least one working crown layer (61, 62) being metal cords (21, 31) with saturated layers, at least one internal layer being sheathed with a layer (24, 34) consisting of a polymer composition such as a rubber composition, **characterized in that** the ends of at least two working crown layers (61, 62) are radially uncoupled by a polymer compound (8), and **in that**, in each of the shoulders of the tyre, at least the uncoupling polymer compound (8) in contact with the ends of at least two working crown layers (61, 62) exhibits, in the sorption test, a gas content lower than 0.06 m$^3_{STP}$/m$^3_{ML}$.

2. Tyre (1) according to Claim 1, **characterized in that** the said reinforcing elements of at least one working crown layer (61, 62) are metal cords (21, 31) with layers of construction [L+M], comprising a first layer C1 of L threads (22, 32) of diameter $d_1$ wound together in a helix at a pitch $p_1$ with L ranging from 1 to 4, which is surrounded by an external layer C2 of M threads (23, 33) of diameter $d_2$ wound together in a helix at a pitch $p_2$ with M ranging from 3 to 12, and **in that** a sheath (24, 34) constituted by a rubber composition that is non-crosslinkable, crosslinkable or crosslinked, based on at least one diene elastomer, covers said first layer C1.

3. Tyre (1) according to Claim 2, **characterized in that** the diameter of the threads (22, 32) of the first layer C1 is comprised between 0.10 and 0.5 mm and **in that** the diameter of the threads (23, 33) of the layer C2 is comprised between 0.10 and 0.5 mm.

4. Tyre (1) according to one of Claims 2 and 3, **characterized in that** the rubber sheath (24, 34) has a mean thickness ranging from 0.010 mm to 0.040 mm.

5. Tyre (1) according to one of the preceding claims, **characterized in that** at least the uncoupling polymer compound (8) in contact with the ends of at least two working crown layers (61, 62) is an elastomeric compound based on natural rubber or on synthetic polyisoprene containing a majority of cis-1, 4 sequences and possibly on at least one other diene elastomer, the natural rubber or the synthetic polyisoprene in the case of a cut, being present in a predominant proportion in relation to the proportion of the other diene elastomer or elastomers used and of a reinforcing filler consisting:

(i) either of carbon black with a BET specific surface area lower than 60 m$^2$/g, used in a proportion comprised between 20 and 80 phr,
(ii) or of a white filler of silica and/or alumina type containing SiOH and/or AlOH surface functions selected from the group consisting of precipitated or pyrogenated silicas, aluminas or alumino silicates or alternatively still carbon blacks modified during the course of or after synthesis with a specific surface comprised between 30 and 260 m$^2$/g used at a proportion comprised between 20 and 80 phr,
(iii) or of a cut of carbon black described at (i) and a white filler described at (ii), in which cut the overall proportion of filler is comprised between 20 and 80 phr.

6. Tyre (1) according to one of the preceding claims, **characterized in that** at least the uncoupling polymer compound (8) in contact with the ends of at least two working crown layers (61, 62) is stoved just before being set in position during the manufacture of the tyre.

7. Tyre (1) according to one of the preceding claims, **characterized in that** the crown reinforcement (6) comprises at least one layer of circumferential reinforcing elements.

8. Tyre (1) according to one of the preceding claims, **characterized in that** the reinforcing elements of at least one layer of the carcass reinforcement (2) are metal cords exhibiting in what is known as the permeability test a flow rate lower than 20 cm$^3$/min.

EP 2 741 925 B1

FIG. 1

**FIG.2**

**FIG.3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006013077 A
- WO 2009083212 A
- EP 0799854 A

**Littérature non-brevet citée dans la description**

- **BRUNAUER ; EMMET ; TELLER.** *Journal of the American Chemical Society,* Février 1938, vol. 60, 309
- *Conférence N° 24 du Meeting ACS, Rubber Division, Anaheim, Californie,* 06 Mai 1997